# EUROPEAN PATENT SPECIFICATION

(11) **EP 1 426 161 B1**
(45) Date of publication and mention of the grant of the patent: **15.11.2006**
(21) Application number: 03028117.4
(22) Date of filing: 05.12.2003
(51) Int. Cl.: B29C 45/27, H05B 3/42

(54) **Injection molding nozzle with embedded and removable heaters**
Spritzgiessdüse mit eingebetteten und abnehmbaren Heizelementen
Buse d'injection pour une presse à injecter avec des éléments chauffants integrés et amovibles

(30) Priority: 06.12.2002 US 431242 P
(43) Date of publication of application: 09.06.2004
(73) Proprietor: MOLD-MASTERS LIMITED, Georgetown Ontario L7G 4X5 (CA)
(72) Inventor: Olaru, George, Toronto Ontario M2L 1A7 (CA)
(74) Representative: Grünecker, Kinkeldey, Stockmair & Schwanhäusser Anwaltssozietät

(56) References cited:
- EP-A- 0 444 748
- EP-A- 0 653 283
- EP-A- 1 252 998
- US-A- 3 812 323
- US-A1- 2002 102 322
- US-B1- 6 394 784

## Description

### BACKGROUND OF THE INVENTION

This invention relates generally to injection molding and more particularly to an injection molding nozzle having more than one heating element.

High reliability is critical in most injection molding applications. Failure of a component in an injection molding system results in lost output during the time it takes to detect what component has failed, replace the component and restart the molding process. Failure of the heating element for a hot runner injection molding nozzle during the molding operation can result in costly process interruptions.

There are generally two types of heaters for providing heat along the melt channel of a hot runner nozzle. The first type includes external heaters that are located outside of but in intimate contact with the outer surface of the nozzle body. External heaters typically can be removed from the injection molding system independently of the hot runner nozzle. Examples of external heaters can be seen in the following patents: U.S Patent Nos. 5,360,333 issued Nov.1, 1994; 5,411,392 issued May 2, 1995; 6,409,497 issued Jun. 25, 2002; 4,940,870 issued July 10, 1990; 6,163,016 issued December 19, 2000; 4,268,241 issued May 19, 1981; and 6,043,466 issued March 28, 2000. Removable external heaters can typically be removed and replaced independently of the nozzle when a heater malfunctions. However, the use of a heater external to and removable from the nozzle can introduce heat transfer variables that can be difficult to predict and control, resulting in undesirable or unintended heat profiles along the nozzle body.

The second type of nozzle heaters includes embedded heaters that are embedded or at least partially embedded in the nozzle body. Embedded heaters include heaters that are internally embedded or cast in the nozzle body, Heaters also include heaters that are embedded or partially embedded in an outer surface of the nozzle body. Examples of surface embedded heaters can be seen in EP 1 252 998 A2 published October 30, 2002 and U.S. Patent Nos. 5,046,942 issued September 10, 1991; 6,162,043 issued December 19, 2000; 5,266,023 issued Nov. 30, 1993; 5,704,113 issued January 6, 1998; 4,771,164 issued September 13, 1998; 5,614,233 issued March 25, 1997; 4,768,283 issued September 6, 1988; 5,235,737 issued August 17, 1993; 4,557,685 issued December 10, 1985; 5,282,735 issued February 1, 1994; and 5,046,942 issued September 10, 1991. Embedded heaters can often provide a better and more predictable heat transfer to the nozzle body than an external heater, but generally cannot be replaced independently of the nozzle. Some embedded heaters consist of elongate cartridges that are inserted into bores in the nozzle body that run parallel to the nozzle melt bore.

Attempts have been made at designs that permit a quick replacement of a nozzle heater by providing access to the nozzle from a mold side of the injection molding system. For example U.S. Patent No. 6,162,043 issued December 19, 2000 discloses an injection molding apparatus in which a hot runner nozzle with an heater has a threaded upper end such that it can be screwed in and out of the injection molding apparatus from a mold side thereof. U.S. Patent No. 6,043,466 issued March 28, 2000 shows an example of an externally mounted heater that can be accessed from the mold side. U.S. Patent Nos. 6,309,207 issued October 30, 2001 and 5,533,882 issued July 9, 1996 also show systems in which access from a mold side is provided to the nozzle heater.

In order to provide redundancy and avoid process interruptions due to heater failure, designs have been proposed in which two overlapping heaters are provided along the heater nozzle, as shown for example, in the above mentioned U.S Patent No. 6,394,784 and EP patent application EP 1 252 998 A2. However, such solutions are limited by the size of the nozzle and do not provide the option of replacing the heater independent of the nozzle.

A common concern in hot runner nozzles is to provide a uniform heat profile along the length of the nozzle body, especially in areas of the nozzle body such as its tip and head that are close to heat losing contact points with the rest of the injection molding system.

Thus there is a need for a hot runner nozzle heating system which provides a high degree of reliability, predictable and efficient heat transfer, and which can be quickly repaired in the event of a failure. A heating system that can provide an efficient heat profile along the length of the hot runner nozzle is also desirable.

### SUMMARY OF THE INVENTION

The present invention provides a hot runner nozzle that has at least two heaters, one of which is embedded or partially embedded in the nozzle body, and the other of which is a replaceable heater that is located over the nozzle body. The replaceable heater may be configured so that it can be removed from the injection molding apparatus independently of the hot runner nozzle. The at least two heaters may be configured and calibrated to provide redundant heating functions and act as backup for each other, or to work in conjunction with each other. Each of the heaters could include more than one independent electrically resistive heating wires to provide further redundancy.

According to one aspect of the invention, there is provided an injection molding heated nozzle that includes a nozzle body defining a melt bore having an entry end and an exit end, a first heater carried by the nozzle body for heating the nozzle body along a length of the melt bore, and a second heater removably mounted to the nozzle body for heating the nozzle body, at least a portion of the second heater overlapping a portion of the first heater.

Other aspects and features of the present invention will become apparent to one of ordinary skill in the art upon review of the following description of specific embodiments of the invention in conjunction with the accompanying Figures.

### BRIEF DESCRIPTION OF THE DRAWINGS

Embodiments of the present invention will now be described, by way of example only, with reference to the attached Figures, wherein:

Figure 1 is a simplified cross-sectional view of a pair of nozzle assemblies in accordance with the present invention;

Figure 2 is a partially exploded perspective view showing a nozzle according to the present invention ready for assembly;

Figure 3 is a simplified sectional view of the nozzle of Figure 2; Figure 5 is a simplified sectional view of a runner nozzle not in accordance with the present invention; and

Figures 4, 6, 7 are each simplified sectional views of nozzles according to a further embodiments of the invention.

### DETAILED DESCRIPTION

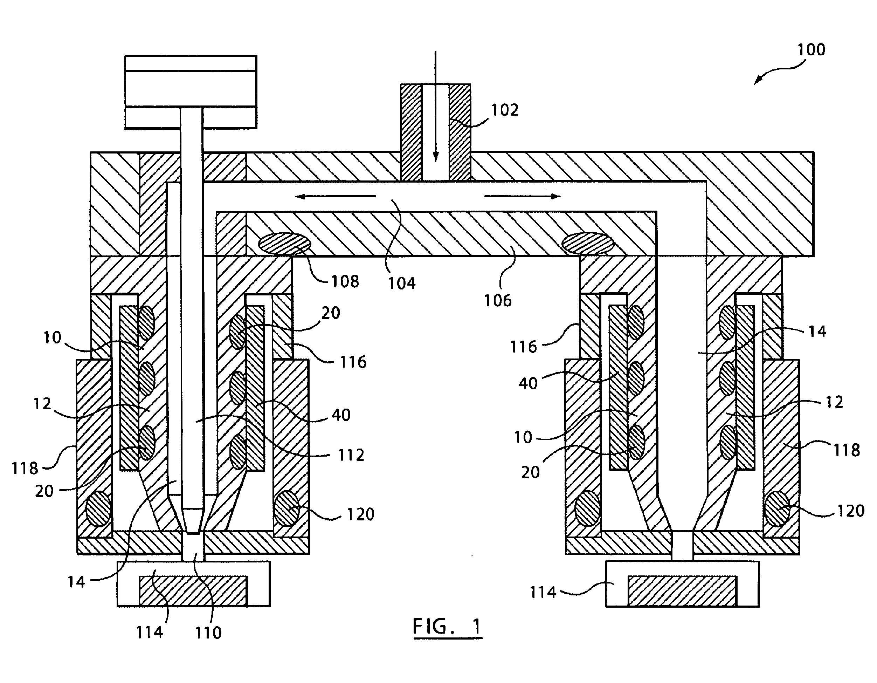

Figure 1 shows, indicated generally by 100, a simplified view of a hot runner injection molding system showing aspects of the present invention. The system 100 includes a melt passage 102 that branches out into the passages of a manifold melt chamber 104 provided through manifold 106. Manifold 106 is heated by manifold heaters 108. Each of the passages of the manifold melt chamber 104 communicates with a respective nozzle melt bore 14 passing through a respective hot runner nozzle 10. The melt bore 14 of each nozzle communicates through a respective mold gate 110 with a mold cavity 114. Spacer plates or flanges 116 and a cavity plate 118, through which cooling channels 120 may be provided, define nozzle cavities in the system 100.

As shown in Figure 1, one nozzle 10 is thermal gated and the other nozzle 10, which includes valve pin 112, is valve gated. In practice, the two types of gating are generally not used in the same system, however are shown in Figure 1 to demonstrate that the heating configuration of the present invention can be applied in different gating configurations.

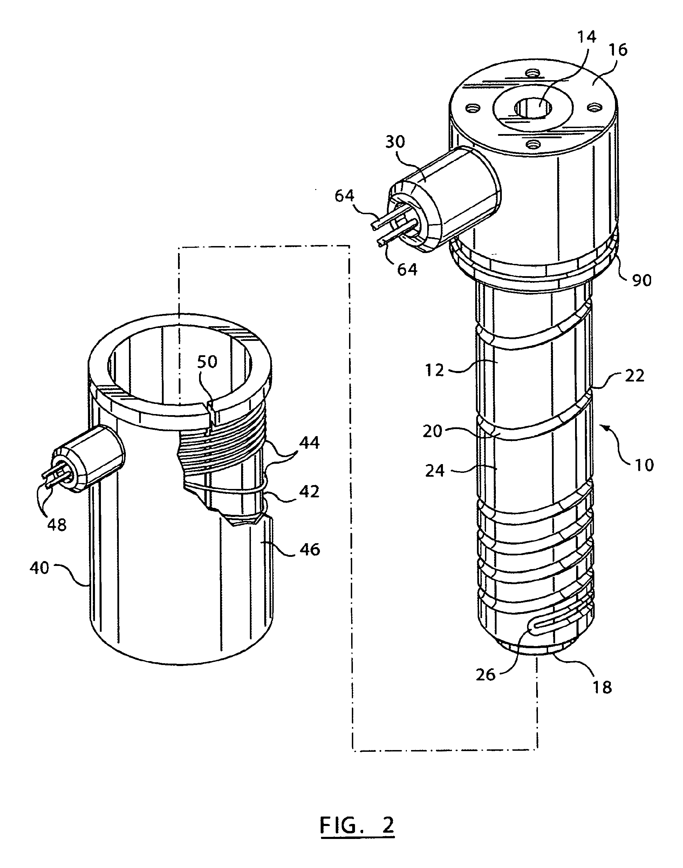

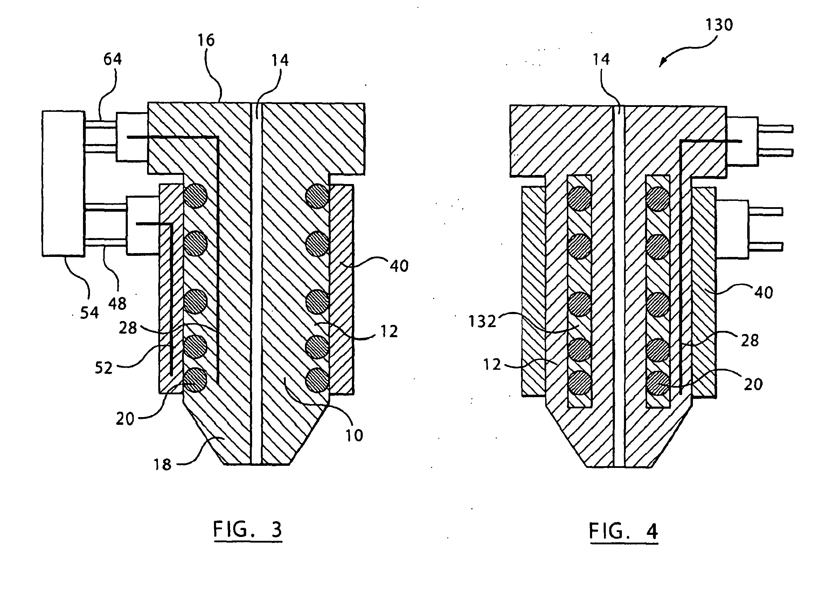

With reference to Figures 2 and 3, nozzle 10 has a steel body 12 through which the melt bore 14 extends from a melt entry end 16 to a melt exit end 18. An electrical heating element 20, such as a resistive wire, is press fitted in a spiral channel 22 which extends around the outer surface 24 of the nozzle body 12. In the embodiment of Figure 2, the heating element 20 has a U-shaped bend 26 near the exit end 18 of the steel body 12, and two ends that extend from the body through a terminal housing 30, near the entry end 16, as electrical terminals 64. A steel collar 90 may be provided at the entry end 16 of the nozzle. A thermocouple 28 is preferably provided through the steel body 12, parallel to melt channel 14, for providing feedback indicative of the temperature of the nozzle 10.

According to embodiments of the invention, an external removable clamp heater 40 is provided over the steel body 12 of the nozzle 10, and clamped to its outer surface 24. The clamp heater 40 shown in Figure 2 includes an inner sleeve 42 formed from a high heat conductivity material, which is placed in tight contact with the outer surface 24 of the nozzle body 12. A heating element 44 spirals around the inner sleeve, and is surrounded by an outer sleeve 46. Two ends of the heating element extend from the clamp heater 40 as electrical terminals 48. In the illustrated embodiment, the inner sleeve 42 includes an axial slot 50 to facilitate mounting and removal of the clamp heater 40 on the nozzle body 12. A compressive device such as a corrugated wall (not shown) may be located between the outer sleeve 46 and the heating element 44 to clamp the clamp heater in place, or other clamping configurations may be used such that the clamp heater 40 can be removed from the nozzle 10 and replaced. The clamp heater preferably includes thermocouple 52 (Figure 3) for monitoring the temperature of the clamp heater 40. With reference to Figure 1, preferably at least a lower portion of the cavity plate 118 is removable or otherwise configured to allow access to the nozzle 10 from a mold side of the injection molding system 100 so that the clamp heater 40 can be removed and replaced independently of the nozzle 10.

The embedded heater 20 and clamp heater 40 are both positioned to provide heat along the same portions of the nozzle body 12 surrounding the melt bore 14. Preferably, the clamp heater and embedded heater are pre-calibrated so that when operated independently they each provide an identical or similar heat profile along the melt bore. With reference to Figure 3, a controller 54 is operatively connected to the electrical terminals 48 and 64 of external clamp heater 40 and embedded heater 20, respectively, and is connected to receive feedback signals from temperature sensing thermocouples 28 and 52.

In one mode of operation, the heating for the nozzle 10 is provided by embedded heater 20. In the event that feedback from thermocouple 28, when compared against a predetermined threshold value, indicates that embedded heater 20 has partially or completely failed, the controller 54 is configured to automatically switch power from embedded heater 20 to clamp heater 40, with minimal or no disturbance to the molding process. The controller 54 can monitor thermocouple 52 to track operation of the clamp heater 40. In the event that clamp heater 40 then fails, it can be removed from the nozzle 10 and replaced, without requiring the nozzle to be replaced, thereby reducing downtime. The nozzle 10 can subsequently be replaced with a nozzle having a working embedded heater during a scheduled maintenance downtime.

The use of an embedded heater in combination with a backup external removable heater can provide a design in which improved heat transfer characteristics of an embedded heater are normally realized. However, if the embedded heater fails, the backup clamp heater can take over without stopping the molding process.

In some embodiments, the embedded heater may act as the backup heater to the external clamp heater. In some embodiments, the embedded heater and the clamp heater may work simultaneously to improve the heat profile along the length of the nozzle melt bore and provide extra heating in areas of the nozzle where heat escapes faster, for example near the gate 110, and near the entry end 16.

Two thermocouples 28 and 52 are shown in the nozzle 10 of Figure 3. The thermocouples can, in some embodiments, act as backups for each other independently of the heater operation. For example embedded thermocouple 28 may fail, but embedded heater 20 still be functional. The controller 54 could be configured to, upon detecting an out of range or loss of signal from embedded thermocouple 28, check a signal from external thermocouple 52 against one or more predetermined thresholds to determine if the problem is with the embedded thermocouple 28 rather than the embedded heater 20, and if so, use external thermocouple 52 to subsequently monitor the operation of embedded heater 20. In some embodiments, rather than two thermocouples, there may only be one thermocouple, either embedded in or external to the nozzle body 12 for monitoring the heat profile of the nozzle melt bore (see Figure 4 for example).

The embedded heater configuration shown in Figures 2 and 3 may be brazed in the spiral channel 22.

The first or embedded heater carried by nozzle 10 could take a number of forms other than that shown in Figures 2 and 3. For example, Figure 4 shows a further hot runner nozzle 130 that is similar to nozzle 10, except that the heater 20 is embedded internally within the nozzle body 12 in a high heat conductive insert 132. Nozzles having cast-in heaters could be used in applications of the present invention.

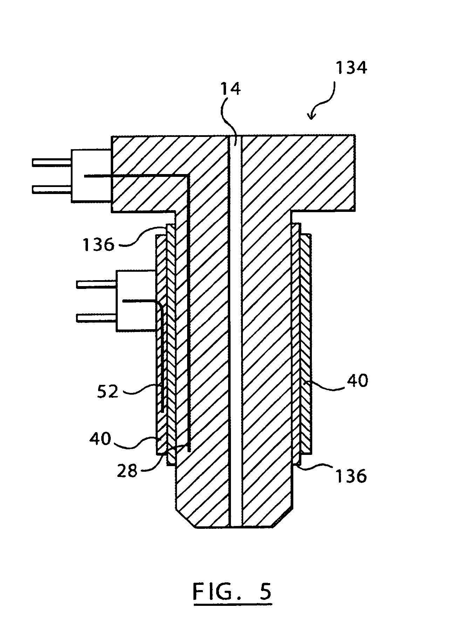

Figure 5 shows yet a further hot runner nozzle 134, not according to the invention which is similar to nozzle 10, except that the first heater is made up of one or more film heaters 136 that are secured but not embedded to the outer surface of the nozzle body 12 to provide heat along the length of the melt bore 14. External clamp heater 40 is secured over the film heater 136.

The embedded heater could also take other forms, for example, induction heating systems could be used a heat pipe could be used, and axial cartridge heaters could be used.

The external heater 40 can also take a number of different forms other than that shown in Figure 2. For example, band heaters configurations and external helical heater configurations could be suitably adapted for use in embodiments of the invention. Film heater configurations could also be used in the external heater.

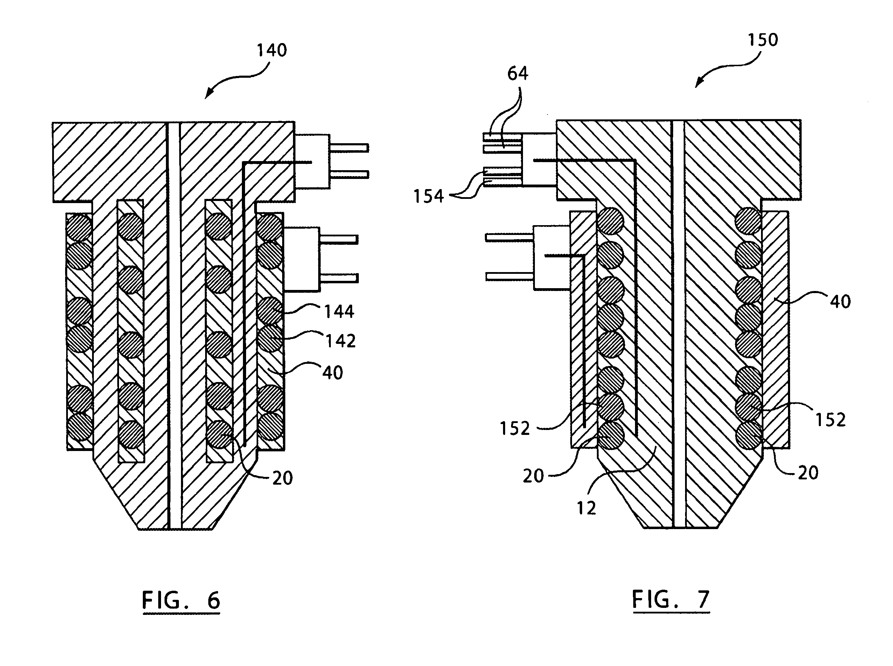

In some embodiments, the nozzle may have two independent embedded heaters, in addition to the external heater, to provide additional backup redundancy. By way of example, Figure 7 shows another embodiment of a nozzle 150 according to the present invention. Nozzle 150 is similar to nozzle 10, except that an additional helical heater 152, terminating in terminal connections 154, is embedded in the surface of nozzle body 12 adjacent to and electrically independent from the first embedded heater 20. Clamp heater 40 extends over both the embedded heaters 20, 152. In one embodiment, controller 54 causes the second embedded heater 152 to provide heating to the nozzle body when the first embedded heater 20 malfunctions. In the event that the second embedded heater 152 then malfunctions, the external clamp heater 40 takes over. In some embodiments, the two embedded heaters 20, 152 may be configured to work together to improve the heat profile along the length of the nozzle melt bore, in addition to or instead of as backup heaters to each other.

In some embodiments, an additional backup heater may also be used in clamp heater 40, and in this regard Figure 6 shows a nozzle 140 according to a further embodiment of the invention. Nozzle 140 is similar to nozzle 130, except that the clamp heater 40 of nozzle 140 includes two electrically independent helical heating wires 142 and 144, to serve as backups for each other.

The nozzles of the present invention are, in preferred embodiments used in injection molding systems that are configured to provide access to the clamp heater and nozzles from a mold side of the system. In some embodiments, the nozzle may be configured to be removed from the mold side.

## Claims

1. An injection molding heated nozzle (10) comprising:
a nozzle body (12) defining a melt channel (14);
a first heater (20) securely attached to and supported by the nozzle body (12) for heating a first portion of the melt channel (14); and
a second heater (40) attached to the nozzle body (12) for heating a second portion of the melt channel (14), such that the second heater (40) at least partially overlaps the first heater (20);
**characterized in that** the first heater (20) is at least partially embedded in the nozzle body (12) and the second heater (40) is slidably attached to the nozzle body (12).

2. The nozzle (10) of claim 1, wherein the first heater (20) is located in a groove (22) in the nozzle body (12).

3. The nozzle (10) of claim 1, wherein the first portion of the melt channel (14) heated by the first heater (20) is substantially the same as the second portion of the melt channel (14) heated by the second heater (40).

4. The nozzle (10) of claim 3, wherein the second heater (40) is electrically independent from the first heater (20).

5. The nozzle (10) of claim 4, wherein at least one of the first and second heaters (20,40) is alternatively operable to run simultaneously with and as a back-up to the other heater.

6. The nozzle (10) of claim 4, wherein at least one of the first and second heaters (20,40) is operable to run simultaneously with or as a back-up to the other heater.

7. The nozzle (10) of claim 1, wherein the first heater (20) includes two independent heaters.

8. The nozzle (10) of claim 1, wherein the second heater (40) includes two independent heaters.

9. The nozzle (10) of claim 1, wherein the second heater (40) is located on a sleeve (46) that is clampable to the nozzle body (12).

10. The nozzle (10) of claim 9, further comprising at least one thermocouple (52) for monitoring the temperature of the first and/or second heater (20,40).

11. The nozzle (10) of claim 10, wherein a first thermocouple (52) is located on the clampable sleeve (46) for monitoring the temperature of the second heater (40) and a second thermocouple (28) is positioned along the nozzle body (12) for monitoring the temperature of the first heater (20).

12. The nozzle (10) of one of the claims 1 to 11, wherein the second heater (40) is movable along the nozzle body (12).

13. An injection molding apparatus (100) comprising:
an injection molding manifold (106);
an injection molding heated nozzle (10) according to one of the claims 1 to 12, the nozzle (10) being in fluid communication with the injection molding manifold (106) at a first end and a mold gate (110) of a mold cavity (114) at a second end.

## Patentansprüche

1. Eine beheizte Spritzgießdüse (10) umfassend:
einen Düsenkörper (12), der einen Schmelzekanal (14) definiert;
einen ersten Heizer (20), der sicher angebracht an und unterstützt durch den Düsenkörper (12) ist, um einen ersten Abschnitt des Schmelzekanals (14) zu beheizen; und
einen zweiten Heizer (40), der an dem Düsenkörper (12) angebracht ist, um einen zweiten Abschnitt des Schmelzekanals (14) zu beheizen, wobei der zweite Heizer (40) zumindest teilweise den ersten Heizer (20) überlappt;
**dadurch gekennzeichnet, dass** der erste Heizer (20) zumindest teilweise in dem Düsenkörper (12) eingebettet ist und der zweite Heizer (40) gleitbar an dem Düsenkörper (12) angebracht ist.

2. Die Düse (10) nach Anspruch 1, wobei der erste Heizer (20) in einer Nut (22) in dem Düsenkörper (12) angeordnet ist.

3. Die Düse (10) nach Anspruch 1, wobei der erste Abschnitt des Schmelzekanals (14), der durch den ersten Heizer (20) beheizt ist, im Wesentlichen der gleiche Abschnitt ist, wie der zweite Abschnitt des Schmelzekanals (14), der durch den zweiten Heizer (40) beheizt ist.

4. Die Düse (10) nach Anspruch 3, wobei der zweite Heizer (40) elektrisch unabhängig von dem ersten Heizer (20) ist.

5. Die Düse (10) nach Anspruch 4, wobei zumindest die ersten und zweiten Heizer (20,40) alternativ betreibbar sind, um simultan mit und als Back-up für den anderen Heizer zu laufen.

6. Die Düse (10) nach Anspruch 4, wobei zumindest einer der ersten und zweiten Heizer (20, 40) betreibbar ist, um simultan mit oder als Back-up für den anderen Heizer zu laufen.

7. Die Düse (10) nach Anspruch 1, wobei der erste Heizer (20) zwei unabhängige Heizer umfasst.

8. Die Düse (10) nach Anspruch 1, wobei der zweite Heizer (40) zwei unabhängige Heizer umfasst.

9. Die Düse (10) nach Anspruch 1, wobei der zweite Heizer (40) auf einer Hülse (46) angeordnet ist, die auf den Düsenkörper (12) aufklemmbar ist.

10. Die Düse (10) nach Anspruch 9, weiter zumindest ein Thermoelement (52) umfassend, um die Temperatur des ersten und/oder zweiten Heizers (20, 40) zu überwachen.

11. Die Düse (10) nach Anspruch 10, wobei ein erstes Thermoelement (52) auf der aufklemmbaren Hülse (46) angeordnet ist, um die Temperatur des zweiten Heizer (40) zu überwachen und ein zweites Thermoelement (28) entlang des Düsenkörpers (12) positioniert ist, um die Temperatur des ersten Heizer (20) zu überwachen.

12. Die Düse (10) nach einem der Ansprüche 1 bis 10, wobei der zweite Heizer (40) entlang des Düsenkörpers (12) bewegbar ist.

13. Eine Spritzgießvorrichtung (100) umfassend:
einen Spritzgießverteiler (106);
eine beheizte Spritzgießdüse (10) nach einem der Ansprüche 1 bis 12, die Düse (10) steht an einem ersten Ende mit dem Spritzgießverteiler (106) und an einem zweiten Ende mit einer Formangussöffnung (110) eines Formhohlraums (114) in Fluidverbindung.

## Revendications

1. Buse chauffée de moulage par injection (10) comprenant :
un corps de buse (12) définissant un canal de coulée (14) ;
un premier dispositif de chauffage (20) fixé de manière sûre et supporté par le corps de buse (12) pour chauffer une première partie du canal de coulée (14) ; et
un second dispositif de chauffage (40) fixé sur le corps de buse (12) pour chauffer une seconde partie du canal de coulée (14), de sorte que le second dispositif de chauffage (40) chevauche au moins partiellement le premier dispositif de chauffage (20) ;
**caractérisée en ce que** le premier dispositif de chauffage (20) est au moins partiellement enfoncé dans le corps de buse (12) et le second dispositif de chauffage (40) est fixé de manière coulissante sur le corps de buse (12).

2. Buse (10) selon la revendication 1, dans laquelle le premier dispositif de chauffage (20) est situé dans une rainure (22) située dans le corps de buse (12).

3. Buse (10) selon la revendication 1, dans laquelle la première partie du canal de coulée (14) chauffée par le premier dispositif de chauffage (20) est sensiblement la même que la seconde partie du canal de coulée (14) chauffée par le second dispositif de chauffage (40).

4. Buse (10) selon la revendication 3, dans laquelle le second dispositif de chauffage (40) est électriquement indépendant du premier dispositif de chauffage (20).

5. Buse (10) selon la revendication 4, dans laquelle au moins l'un des premier et second dispositifs de chauffage (20, 40) est utilisable de manière alternée pour fonctionner simultanément avec et en tant que dispositif de secours par rapport à l'autre dispositif de chauffage.

6. Buse (10) selon la revendication 4, dans laquelle au moins l'un des premier et second dispositifs de chauffage (20, 40) est utilisable pour fonctionner simultanément avec ou en tant que dispositif de secours par rapport à l'autre dispositif de chauffage.

7. Buse (10) selon la revendication 1, dans laquelle le premier dispositif de chauffage (20) comprend deux dispositifs de chauffage indépendants.

8. Buse (10) selon la revendication 1, dans laquelle le second dispositif de chauffage (40) comprend deux dispositifs de chauffage indépendants.

9. Buse (10) selon la revendication 1, dans laquelle le second dispositif de chauffage (40) est situé sur un manchon (46) qui peut être serré sur le corps de buse (12).

10. Buse (10) selon la revendication 9, comprenant en outre au moins un thermocouple (52) pour surveiller la température du premier et/ou du second dispositif de chauffage (20, 40).

11. Buse (10) selon la revendication 10, dans laquelle un premier thermocouple (52) est positionné sur le manchon (46) pouvant être serré pour surveiller la température du second dispositif de chauffage (40) et un second thermocouple (28) est positionné le long du corps de buse (12) pour surveiller la température du premier dispositif de chauffage (20).

12. Buse (10) selon l'une quelconque des revendications précédentes 1 à 11, dans laquelle le second dispositif de chauffage (40) est mobile le long du corps de buse (12).

13. Appareil de moulage par injection (100) comprenant :
un collecteur de moulage par injection (106) ;
une buse chauffée (10) de moulage par injection selon l'une quelconque des revendications 1 à 12, la buse (10) étant en communication de fluide avec le collecteur de moulage par injection (106) au niveau d'une première extrémité et d'une attaque de coulée (110) de moule d'une cavité de moule (114) au niveau d'une seconde extrémité.
